# EUROPÄISCHE PATENTSCHRIFT

(11) **EP 2 907 585 B1**
(45) Veröffentlichungstag und Bekanntmachung des Hinweises auf die Patenterteilung: **03.04.2019**
(21) Anmeldenummer: 15154481.4
(22) Anmeldetag: 10.02.2015
(51) Int. Cl.: B05B 12/12, B05B 13/02, B05C 5/02, B05D 5/10, B05D 7/14, B05C 13/02, B23Q 3/06, B23Q 17/00, B05C 13/00, B05D 1/00, B05D 1/26

(54) **Verfahren und Vorrichtung zum Auftragen eines Fluids auf eine Oberfläche eines Bauteils**
Method and device for applying a fluid to a surface of a component
Procédé et dispositif d'application d'un fluide à la surface d'un composant

(30) Priorität: 17.02.2014 DE 102014002127
(43) Veröffentlichungstag der Anmeldung: 19.08.2015
(73) Patentinhaber: Drei Bond GmbH, 85737 Ismaning (DE)
(72) Erfinder: Schmidt, Sebastian, 85570 Markt Schwaben (DE); Hoffmann, Veit, 85386 Eching (DE); Lauber, Berhard, 85221 Dachau (DE)
(74) Vertreter: Reitstötter Kinzebach

(56) Entgegenhaltungen:
- WO-A1-2013/175392
- US-A- 5 614 024
- US-A1- 2012 156 966

## Beschreibung

Die vorliegende Erfindung betrifft ein Verfahren zum Auftragen eines Fluids auf eine Oberfläche eines Bauteils, wobei man das Bauteil auf mehreren Bauteilaufnahmen in einer computergesteuerten Beschichtungsanlage anordnet, die Position des Bauteils erfasst und das Fluid gemäß einem vorprogrammierten Beschichtsverlauf auf die Oberfläche des Bauteils aufträgt. Eine computergesteuerte Beschichtungsanlage dieser Art ist in WO2013/175392 A1 offenbart.

Es ist bekannt, metallische Bauteile an deren Fügeflächen zu verkleben bzw. sie durch Flächendichtungen abzudichten. Beispielsweise werden in der Fahrzeugindustrie einzelne Bauteile des Motorblocks oder des Getriebes durch Klebedichtungen miteinander verbunden. Dazu wird in automatisierten Fertigungslinien eine flüssige bis pastöse Klebemasse mithilfe von Dosierrobotern als Raupe entlang der gewünschten Klebekontur auf eine Fügefläche des Bauteils aufgebracht. Anschließend werden die Bauteile entlang ihrer Fügeflächen aneinander gepresst und gegebenenfalls zusätzlich mittels Schraub- oder Klemmverbindungen miteinander verbunden. Als Dichtungs- oder Klebematerialien kommen dabei unterschiedlichste Ein- und Mehrkomponentenmaterialien zum Einsatz, beispielsweise Silicon-, Polyurethan-, Epoxidharzkleber, Hotmelts usw.

Im Folgenden wird zwischen den Begriffen Kleben und Dichten nicht streng unterschieden, da in zahlreichen Anwendungsfällen meist beide Funktionen - gegebenenfalls unterschiedlich gewichtet - erwünscht sind. Wenn die zu verbindenden Bauteile durch weitere Verbindungsmittel, beispielsweise durch Schrauben, form- oder reibschlüssige Mittel, Schweißnähte usw., zusammengehalten werden, wird die Dichtungsfunktion im Vordergrund stehen. Es ist aber auch möglich, Bauteile mithilfe des erfindungsgemäßen Verfahrens zu verkleben, d.h. ohne zusätzliche mechanische Verbindungsmittel miteinander zu verbinden.

Bei den computergesteuerten Beschichtungsanlagen im Sinne der vorliegenden Erfindung handelt es sich üblicherweise um CNC-Anlagen, bei denen mittels dreidimensional steuerbarer Dosieranlagen komplexe Dichtungsverläufe entlang der Kontur der Fügeflächen mit hoher Präzision auf das Bauteil aufgetragen werden können. Für die computergesteuerte, automatisierte Auftragung des Fluids ist eine genaue Positionierung des Bauteils in der Beschichtungsanlage unerlässlich.

Gemäß einem bekannten Verfahren, das insbesondere bei der Produktion hoher Stückzahlen eingesetzt wird, werden üblicherweise für jedes Bauteil auswechselbare Grundplatten hergestellt, auf denen stiftartige Bauteilaufnahmen fest montiert sind, in welche das zu beschichtende Bauteil eingesetzt werden. Jede Grundplatte weist üblicherweise einen spezifischen Stecker oder eine Buchse auf, so dass die Grundplatte über eine elektrische Steckverbindung an die CNC-Steuerung angeschlossen werden kann. Die Beschichtungsanlage erkennt somit, welche spezifische Grundplatte gerade eingebaut ist. Über die Erkennung der Grundplatte erfasst die Steuerung auch die Position des zu beschichtenden Bauteils. Dementsprechend kann das jeweilige Beschichtungsprogramm ausgewählt und das Bauteil mit dem Dosierkopf exakt angefahren werden, um eine Raupe des Fluids auf der Oberfläche gemäß dem gewünschten Dichtungsverlauf aufzutragen.

Für Klein- und Vorserien mit relativ geringer Stückzahl ist das bekannte Verfahren aber nachteilig, da derartige vorgefertigte Grundplatten mit fixierten Bauteilaufnahmen teuer sind und für unterschiedliche zu beschichtende Bauteile individuell angefertigt werden müssen. Bei einer Vielzahl an zu beschichtenden Bauteile beanspruch die vorgefertigten Grundplatten auch relativ viel Lagerplatz.

Der vorliegenden Erfindung liegt daher das technische Problem zugrunde, ein Verfahren zum Auftragen eines Fluids auf eine Oberfläche eines Bauteils anzugeben, welches kostengünstiger ist und sich daher insbesondere für die Klein- und Vorserienfertigung eignet.

Gelöst wird dieses technische Problem durch das Verfahren des vorliegenden Anspruchs 1. Vorteilhafte Weiterbildungen des erfindungsgemäßen Verfahrens sind Gegenstände der abhängigen Patentansprüche.

Die Erfindung betrifft demnach ein Verfahren zum Auftragen eines Fluids auf eine Oberfläche eines Bauteils, wobei man das Bauteil auf mehreren Bauteilaufnahmen in einer computergesteuerten Beschichtungsanlage anordnet, die Position des Bauteils erfasst und das Fluid gemäß einem vorprogrammierten Beschichtungsverlauf auf die Oberfläche des Bauteils aufträgt. Das erfindungsgemäße Verfahren ist dadurch gekennzeichnet, dass wenigstens eine der Bauteilaufnahmen auf einer Grundplatte frei positionierbar montiert ist.

Aufgrund der freien Positionierbarkeit der wenigstens einen Bauteilaufnahme ist es möglich, unterschiedliche Bauteile auf ein und derselben Grundplatte anzuordnen, was die Herstellungskosten der Anlage drastisch minimiert.

Für die meisten Bauteile reichen drei Bauteilaufnahmen für eine stabile Anordnung des Bauteils in der Beschichtungsanlage aus. Bei größeren oder besonders komplex geformten Bauteilen können auch mehr Bauteilaufnahmen vorgesehen sein, beispielsweise vier oder fünf Bauteilaufnahmen.

Man kann beispielsweise vorsehen, dass eine Bauteilaufnahme fest mit der Grundplatte verbunden ist, während die übrigen Bauteilaufnahmen frei positionierbar montiert werden können. Die Position der fest montierten Bauteilaufnahme kann beispielsweise unterschiedliche Grundplatten kennzeichnen, sodass die Beschichtungsanlage auch ohne elektrische Steckverbindung erkennen kann, welche Grundplatte momentan montiert ist.

Besonders bevorzugt wird man jedoch alle Bauteilaufnahmen frei positionierbar auf der Grundplatte montieren. Besonders bevorzugt wird daher das Bauteil mittels drei bis fünf frei positionierbarer Bauteilaufnahmen, insbesondere mittels drei oder vier frei positionierbarer Bauteilaufnahmen, in der Beschichtungsanlage angeordnet.

Gemäß einer bevorzugten Ausführungsform des erfindungsgemäßen Verfahrens ist wenigstens eine Bauteilaufnahme höhenverstellbar. Vorzugsweise sind alle Bauteilaufnahmen höhenverstellbar. Aufgrund der Höhenverstellbarkeit der Bauteilaufnahmen kann eine spezielle Lage der zu beschichtenden Oberfläche im Raum definiert werden. Häufig ist es beispielsweise erforderlich, dass die zu beschichtende Oberfläche möglichst exakt horizontal ausgerichtet ist. Zur Bestimmung der Höhenlage der zu beschichtenden Oberfläche des Bauteils können höhenverstellbare Lehren verwendet werden, welche die Planlage und die gleichbleibende Bauteilhöhe sicherstellen.

Die Bauteilaufnahmen sind einerseits zwar frei auf der Grundplatte positionierbar, andererseits muss nach Einstellung einer bestimmten Position ein späteres Verrutschen der Bauteilaufnahmen ausgeschlossen werden. Vorteilhafterweise sind die Bauteilaufnahmen daher auch auf der Grundplatte arretier- oder fixierbar. Eine besonders einfache Arretierung/Fixierung der Bauteilaufnahmen wird beispielsweise dadurch gewährleistet, dass die Grundplatte aus einem ferromagnetischen Material besteht und die Bauteilaufnahmen jeweils mit Magnetfüßen versehen sind. Die Magnetfüße können beispielsweise einen mechanischen Schalter aufweisen, der einen in dem Magnetfuß angeordneten drehbaren Permanentmagneten so schaltet, dass die Magnetfüße entweder auf der Grundplatte haften oder von dieser gelöst werden können. Das Bedienpersonal kann daher sehr schnell und zuverlässig zwischen Lösen und Fixieren den Bauteil umschalten.

Besonders bevorzugt weisen die Bauteilaufnahmen austauschbare Kopfteile auf. So kann jede Bauteilaufnahme beispielsweise mit einem Indexstift versehen werden, der in eine vorgegebene Öffnung oder Vertiefung in dem Bauteil eingreift, so dass das Bauteil an dieser Stelle exakt festgelegt. Ein anderes Kopfteil kann als Auflagestift ausgebildet sein, auf welchem das Bauteil an einer örtlich nicht genau definierten Position aufliegt. Zumindest zwei der verwendeten Bauteilaufnahmen sollten mit einem Indexstift ausgerüstet sein, damit die genaue Position des Bauteils parallel zur Ebene der Grundplatte festgelegt ist. Statt der Verwendung eines separaten Auflagestifts kann die Bauteilaufnahme auch so ausgebildet sein, dass die Bauteilaufnahme ohne Indexstift als Auflageelement wirkt.

Als weiteres austauschbares Kopfteil kann ein Erkennungspin vorgesehen sein, mit dessen Hilfe die genaue Position der Bauteilaufnahme erkannt oder eingerichtet werden kann.

Erfindungsgemäß erfolgt die Anordnung und Positionserfassung des Bauteils in der Beschichtungsanlage dadurch, dass man die Bauteilaufnahmen an vorgegebenen Stellen auf der Grundplatte anordnet. Je nach Bauteil können bestimmte Koordinaten für die Soll-Positionen der Bauteilaufnahmen in der computergesteuerten Beschichtungsanlage gespeichert sein. Diese Soll-Position der Bauteilaufnahmen auf der Grundplatte kann dann beispielsweise von einer optischen Positioniereinrichtung angezeigt werden, so dass das Bedienpersonal die Bauteilaufnahme entsprechend positionieren kann.

Gemäß einer besonders bevorzugten Ausführungsform wird die genaue Position der jeweiligen Bauteilaufnahme mittels Laserstrahl erfasst und/oder angezeigt. Dazu weist die Beschichtungsanlage eine Laserpositioniereinrichtung auf, die einen Laserstrahl senkrecht in Richtung Grundplatte ausstrahlt und das reflektierte Licht mittels eines Detektors erfasst. Die Bauteilaufnahme wird zur genauen Positionierung mit einem Erkennungspin versehen, dessen Oberseite von einer tellerartigen Scheibe gebildet wird, in deren Zentrum eine Vertiefung mit einem Durchmesser in der gewünschten Positioniergenauigkeit ausgespart ist. Der Detektor in der Laserpositioniereinrichtung erkennt eine Reflektion des Laserstrahls, wenn dieser außerhalb der Vertiefung auf die Scheibe des Erkennungspins trifft. Sobald die Bauteilaufnahme vom Bedienpersonal exakt positioniert ist, verschwindet der Laserstrahl in der Vertiefung im Zentrum der Scheibe. Der Detektor erkennt dies anhand einer drastischen Verringerung der Intensität des reflektierten Lichts oder, falls der Boden der Vertiefung verspiegelt ist, anhand eines drastischen Anstiegs der Intensität des reflektierten Lichts. Das System signalisiert dem dann dem Bedienpersonal die korrekte Positionierung, so dass das Bedienpersonal die Bauteilaufnahme in dieser Position auf der Grundplatte fixieren kann. Diese Positionierung wird nacheinander für alle frei positionierbaren Bauteilaufnahmen durchgeführt. Nach exakter Positionierung der Bauteilaufnahmen wird das Kopfteil jeweils gemäß den Anforderungen des jeweiligen Bauteils gegen einen Indexstift oder einen Auflagestift oder dient nach Entfernen des Erkennungspins selbst als Bauteilauflage.

Gemäß einer anderen bevorzugten Ausführungsform wird die genaue Position der jeweiligen Bauteilaufnahme mittels eines mechanischen Positionssensors erfasst und/oder angezeigt.

Die Soll-Positionen der Bauteilaufnahmen können anhand von digitalisierten Modellen der jeweiligen zu beschichtenden Bauteile, gegebenenfalls unter Berücksichtigung des gewünschten Beschichtungsverlaufs, errechnet und angezeigt werden. Vorzugsweise erfolgt jedoch auch die Erfassung der Soll-Positionen der Bauteilaufnahmen für ein neues zu beschichtendes Bauteil mittels kann über die optische Positioniereinrichtung, die Laserpositioniereinrichtung, erfolgen. Dazu ordnet das Bedienpersonal zunächst das neue zu beschichtende Bauteil auf drei bis fünf Bauteilaufnahmen in der gewünschten Orientierung und Höhe auf der Grundplatte an. Anschließend wird das Bauteil abgenommen und die Indexstifte und/oder Auflagestifte der Bauteilaufnahmen werden durch Erkennungspins ersetzt. Anschließend positioniert das Bedienpersonal den Laser so auf die einzelnen Bauteilaufnahmen, dass der Laserstrahl jeweils in der Vertiefung des Erkennungspins trifft. Sobald das System die korrekte Positionierung des Lasers signalisiert wird diese Position als Soll-Position der jeweiligen Bauteilaufnahme gespeichert.

Gegenstand der Erfindung ist auch eine computergesteuerte Beschichtungsanlage zum Auftragen eines Fluids auf eine Oberfläche eines Bauteils mit wenigstens einer Grundplatte, auf der mehrere Bauteilaufnahmen frei positionierbar sind, wenigstens einem beweglichen Dosierkopf zum Auftragen des Fluids auf die Oberfläche des Bauteils und wenigstens einer Einrichtung zur Erfassung der Soll-Positionen der Bauteilaufnahmen und/oder zur Anzeige der Soll-Positionen der Bauteilaufnahmen.

Die Erfindung wird im Folgenden anhand eines in den beigefügten Zeichnungen dargestellten Ausführungsbeispiels ausführlich erläutert.

In den Zeichnungen zeigen:
- Figur 1: eine schematische Darstellung einer erfindungsgemäßen Beschichtungsanlage;
- Figur 2: eine ferromagnetische Grundplatte der Beschichtungsanlage der Figur 1 mit frei positionierbaren Bauteilaufnahmen;
- Figur 3: eine perspektivische Darstellung einer Bauteilaufnahme mit Indexstift;
- Figur 4: eine schematische Darstellung einer Bauteilaufnahme mit Erkennungspin;
- Figur 5: eine Stirnansicht der Bauteilaufnahme der Figur 3;
- Figur 6: einen Querschnitt durch die Bauteilaufnahme der Figur 5 entlang der Linie VI-VI der Figur 5;
- Figur 7: eine zweite Ausführungsform einer erfindungsgemäßen Beschichtungsanlage in einer schematischen Darstellung;
- Figur 8: einen mechanischen Positionssensor der Beschichtungsanlage der Figur 7;
- Figur 9: einen Magnetfuß mit einer zweiten Variante eines Erkennungspins für den mechanischen Positionssensor der Figur 8;
- Figur 10: den mechanischen Positionssensor und den Magnetfuß mit der zweiten Variante des Erkennungspins vor Erfassung einer festgelegten Position;
- Figur 11: den mechanischen Positionssensor und den Magnetfuß mit der zweiten Variante des Erkennungspins bei Festlegung einer vorgegebenen Position; und
- Figur 12: eine Variante des Magnetfußes mit einzusetzendem Indexstift;

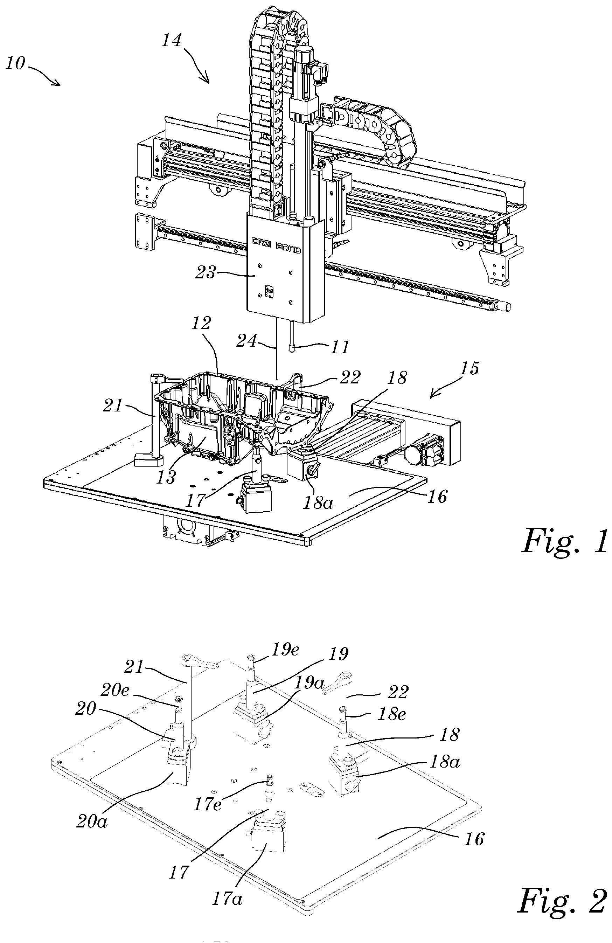

Figur 1 zeigt eine schematische Darstellung der wesentlichen Komponenten einer erfindungsgemäßen Beschichtungsanlage 10, mit der ein Fluid aus einem (nicht dargestellten) Vorratsbehälter mittels einer verfahrbaren Dosierspitze 11 auf die Oberfläche 12 eines Bauteils 13 aufgetragen werden kann. Die Dosierspitze 11 ist im dargestellten Beispiel mittels eines ersten Antriebs 14 in x- und z-Richtung verfahrbar, während ein zweiter Antrieb 15 eine Bewegung des auf einer ferromagnetischen Grundplatte 16 montierten Bauteils 13 in y-Richtung gewährleistet. Durch eine Kombination der Antriebe 14 und 15 kann die Dosierspitze 11 einen beliebig komplexen Fluidverlauf auf die Oberfläche 12 des Bauteils 13 aufgetragen. Beispielsweise lässt sich so eine Dichtungsmasse entlang der Kontur einer Gehäusehälfte, beispielsweise eines Motorgehäuses, auftragen.

Im dargestellten Beispiel ist das Bauteil 13 auf vier Bauteilaufnahmen 17, 18, 19, 20 gelagert. Jede Bauteilaufnahme weist Magnetfüße 17a, 18a, 19a, 20a auf, so dass die Bauteilaufnahmen einerseits auf der ferromagnetischen Grundplatten 16 frei beweglich sind, andererseits aber bei Bedarf aber auch auf der Grundplatte 16 fixiert werden können.

In Figur 2 ist die Grundplatte 16 mit den Bauteilaufnahmen 17, 18, 19, 20 ohne das in Figur 1 dargestellte Bauteil 13 detaillierter dargestellt.

Ferner erkennt man in den Figuren 1 und 2 zwei höhenverstellbare bewegliche Lehren 21, 22, mit deren Hilfe die Höhe des Bauteils 13 und/oder die Neigung der Oberfläche 12 des Bauteils 13 festgelegt werden können. Beispielsweise lässt sich so eine horizontale Anordnung der Oberfläche 12 des Bauteils 13 gewährleisten.

Im dargestellten Beispiel ist die Dosierspitze 11 in einem mit dem Antrieb 4 verbunden Applikationskopf 23 angeordnet, der außerdem eine optische Positioniereinrichtung umfasst. Im dargestellten Beispiel sendet die optische Positioniereinrichtung einen Laserstrahl 24 in Richtung Grundplatte aus, dessen Reflektionen von einem an der Unterseite des Applikationskopfes 23 angeordneten (nicht dargestellten) Detektor erfasst werden. Der Laserstrahl 24 kann so beispielsweise vorgegebene Positionen für die Bauteilaufnahmen auf der Grundplatte 16 markieren. Ferner ist es mittels des Laserstrahls 24 möglich, bei der Ersteinrichtung eines Bauteils die gewählten Positionen der Bauteilaufnahmen in der computergestützten Beschichtungsanlage abzuspeichern.

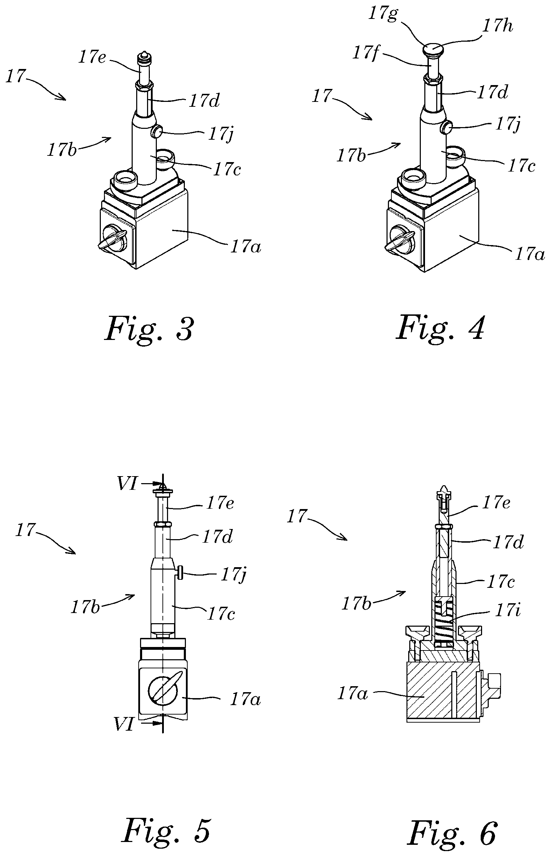

In Figur 3 ist die Bauteilaufnahme 17 detaillierter dargestellt. Man erkennt den Magnetfuß 17a, der eine teleskopartig ausfahrbare Hülsenanordnung 17b trägt. Die Hülsenanordnung 17b besteht aus einer Außenhülse 17c und einer Innenhülse 17d, in die bei der in Figur 3 dargestellten Variante ein Indexstift 17e eingesetzt ist.

In der in Figur 4 dargestellten Variante der Bauteilaufnahme 17 ist statt des Indexstiftes 17e ein Erkennungspin 17f in die teleskopartige Hülsenanordnung 17b eingesteckt.

Die Variante mit dem Indexstift dient zur genauen Positionierung des Bauteils, wobei der Indexstift in eine Öffnung oder Vertiefung an der Unterseite des Bauteils 13 eingreift. Wird der Erkennungspin 17f in die teleskopartige Hülsenanordnung 17b eingesteckt, so kann die Position der Bauteilaufnahme 17 genau bestimmt oder genau festgelegt werden. Ohne Indexstift 17e bzw. Erkennungspin 17f dient die flache Oberseite der Innenhülse 17d im dargestellten Beispiel als Bauteilauflage.

Die Positionierung der Bauteilaufnahme 17 erfolgt mittels eingesetztem Erkennungspin 17f wie folgt: Der Laser wird mittels der Antriebe 14 und 15 an der Sollposition der jeweiligen Bauteilaufnahme auf der Grundplatte 16 positioniert. Das Bedienpersonal positioniert anschließend die Bauteilaufnahme 17 mit eingesetztem Erkennungspin 17f grob unterhalb des Laserstrahls 24. Für die Feinpositionierung weist der Erkennungspin 17f an seiner Oberseite eine flache Scheibe 17g und eine zentrale Bohrung 17h auf. Wenn der Laserstrahl 24 auf die flache Scheibe 17g trifft, kann die Reflektion des Laserstrahls 24 durch den im Applikationskopf 23 angeordneten Detektor erfasst werden. Sobald der Laserstrahl 27 genau auf die Bohrung 17h trifft, verringert sich die Intensität des reflektierten Lichtes drastisch, was von der Auswertelektronik erkannt und dem Bedienpersonal als Erreichen der Soll-Position signalisiert wird, so dass die Bauteilaufnahme an dieser Position mittels Magnetfuß fixiert werden kann. Nach entsprechender Positionierung aller Bauteilaufnahmen 17 - 20 werden die Erkennungspins durch Indexstifte ersetzt oder die Erkennungspins werden herausgenommen, so dass die Bauteilaufnahmen als Bauteilauflagen wirken.

Zum Erfassen der Soll-Positionen der Bauteilaufnahmen 17 - 20 bei der Neueinrichtung eines neuen zu beschichtenden Bauteils 13 eines geht man entsprechend umgekehrt vor: Nachdem das Bauteil 13 in gewünschten Weise mittels der Bauteilaufnahmen 17 - 20 auf der Grundplatte 16 angeordnet wurde, werden die Bauteilaufnahmen 17 - 20 auf der Grundplatte fixiert. Anschließend wird das zu beschichtende Bauteil 13 abgenommen und Erkennungspins in die Bauteilaufnahmen eingesetzt. Dann wird der Laserstrahl 24 über die Antriebseinrichtungen 14 und 15 so gesteuert, dass der Laserstrahl 24 genau in die Bohrung der jeweiligen Bauteilaufnahme trifft. Diese Positionen werden als Soll-Positionen der jeweiligen Bauteilaufnahme 17 - 20 gespeichert.

In den Figuren 5 und 6 ist die Bauteilaufnahme 17 der Figur 3 in der Seitenansicht bzw. in einem Querschnitt entlang der Linie VI-VI der Figur 5 dargestellt. Man erkennt, dass die Innenhülse 17d mittels einer Feder 17i nach oben belastet ist und mittels einer Rändelschraube 17j fixiert werden kann. Nach Lösen der Rändelschraube 17j wird der Indexstift 17e also über die federbelastete Innenhülse 17d nach oben gedrückt, bis die Oberseite des Bauteils 13 gegen die Unterkanten 21a bzw. 22a der Lehren 21 bzw. 21 in Anlage kommt. Somit lässt sich die Höhe des Bauteils an verschiedenen Positionen entlang der Kontur der Bauteiloberseite genau festlegen. Wenn die gewünschte Höhe an einer Stelle eingestellt ist, wird die Position der verschiebbaren Innenhülse 17d der teleskopartigen Hülsenanordnung 17b durch Festziehen der Rändelschraube 17j fixiert.

Abschließend werden mögliche Vorgehensweisen beim Programmieren der Beschichtungsanlage für eine eines neuen Bauteil bzw. beim Beschichten eines bereits programmierten Bauteils näher erläutert:
A: Programmieren/Einrichten eines neuen Bauteils:
   1. Vorbereitung des Datensatzes im dxf oder dwg Format.
   2. Je nach Datensatz ggf. Anpassung des gezeichneten Dichtmittelverlaufs (Polylinie).
   3. Konvertieren der Zeichnung in NC Datensatz.
   4. CNC Programmierung
   5. Laden der Kontur in den Arbeitsspeicher der Dosieranlage.
   6. Anwahl der gewünschten Kontur am HMI.
   7. Die Kontur wird dem Bediener am Bedienfeld nach Auswahl des zu benetzenden Bauteils vorab angezeigt.
   8. Grobe Positionierung des Bauteils durch den Werker, wobei eine freie Positionierung der magnetischen Bauteilaufnahmen möglich ist. Die Planlage wird per Lehre und Arretierung der Aufnahmen eingestellt.
   9. Anfahren des Startpunktes der Kontur per Hand durch den Werker.
   10. Speichern der Achskoordinaten
   11. Vom Startpunkt der Kontur wird das Teil zum Test entsprechend der geladenen Kontur abgefahren.
   12. Eventuelle Korrekturen der Position und Fixierung der magnetischen Bauteilaufnahmen.
   13. Der Dichtmittelauftrag kann jetzt eingerichtet und mittels Verfahrgeschwindigkeit optimiert werden.
   14. Eventuell erforderliche Änderungen am Konturverlauf können direkt am Bedienfeld im CNC-Programm vorgenommen werden. Die Änderungen sind für den Werker direkt am Display der Beschichtungsanlage sichtbar.
   15. Entnahme des Teils und Einstecken eines Erkennungspins in die vorpositionierten Teileaufnahmen. Nun fährt der Werker jede Aufnahmeposition an und speichert deren genaue Position mit Hilfe eines Lasers ab.
   16. Aufnahmestifte wieder einsetzen, Bauteil einlegen und mit Lehre Bauteilhöhe kontrollieren.
B: Beschichten eines bereits programmierten/eingerichteten Bauteils
   1. Anwahl des gewünschten Programms.
   2. Die Kontur wird dem Bediener am Bedienfeld nach Auswahl des zu benetzenden Bauteils vorab angezeigt.
   3. Werker fährt per Knopfdruck (wird durch Programm geführt) die bei der Ersteinrichtung definierten Aufnahmepunkte an. Der Laser zeigt wo die jeweilige Stiftaufnahme zu positionieren ist.
   4. Werker positioniert die Aufnahme mit Hilfe des Lasers in der markierten Position. Per Knopfdruck wird die zweite und dritte und (ggf. weitere) Aufnahmeposition angefahren, so dass letztendlich alle erforderlichen Aufnahmen, wie ursprünglich eingerichtet, positioniert sind.
   5. Werker legt das Bauteil ein und fixiert die Höhe der Aufnahmen mittels Lehre.
   6. Dosierstart auslösen.
   7. Vor dem Auftrag wird die Position der Z-Achse zum Bauteil mittels Taststift nochmals geprüft.

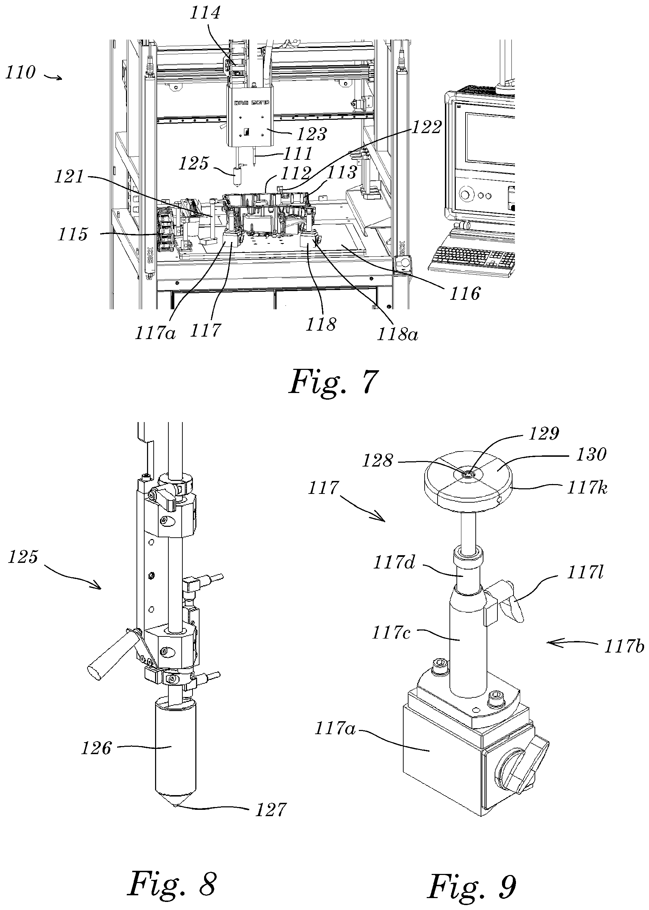

In den Figuren 7 bis 12 wird eine zweite Variante der erfindungsgemäßen Beschichtungsanlage näher beschrieben. Elemente, welche die gleiche oder eine ähnliche Funktion erfüllen, wie Elemente, die bereits im Zusammenhand mit der ersten Ausführungsform der Figuren 1-6 beschrieben worden sind, werden im Folgenden mit der gleichen, aber um 100 erhöhten Bezugsziffer bezeichnet und nicht mehr näher erläutert.

In Figur 7 erkennt man eine Beschichtungsanlage 110, bei der wieder mit einer verfahrbaren Dosierspitze 111 ein Fluid auf die Oberfläche 112 eines Bauteils 113 aufgetragen wird. Man erkennt wieder zwei Bauteilaufnahmen 117, 118 im Vordergrund, auf denen das Bauteil 113 gelagert ist, wobei die Bauteilaufnahmen 117, 118 jeweils wieder mit Magnetfüßen 117a, 118a auf einer ferromagnetischen Grundplatte 116 positioniert sind. Statt eines Laserstrahls weist der Applikatorkopf 123 der zweiten Ausführungsform einen mechanischen Positionssensor 125 auf. Wie der Laserstrahl der ersten Ausführungsform dient der mechanische Positionssensor 125 sowohl zur Erfassung der Sollpositionen der Bauteilaufnahmen bei der Ersteinrichtung eines zu beschichtenden Bauteils, als auch für die Anzeige der Sollpositionen bei der Wiedereinrichtung der Bauteilaufnahmen nach einem Bauteilwechsel.

In Figur 8 ist der mechanische Positionssensor 125 detaillierter dargestellt. Der mechanische Positionssensor 125 weist einen Sensorkopf 126 auf, aus dessen Unterseite ein beweglicher Pin 127 herausragt. Ein im Inneren des Sensorkopfes 126 befindlicher Wegaufnehmer ist so ausgelegt, dass zumindest drei Zustände des Pins 127 unterschieden werden können, nämlich zum einen eine eingefahrene Position, bei welcher der Pin vollständig oder nahezu vollständig in das Innere des Sensorkopfes zurückgedrückt ist, eine teilweise ausgefahrene Position und eine vollständig ausgefahrene Position, bei welcher der Pin auf eine vorgegebene Maximallänge aus dem Gehäuse ausgefahren ist.

Zur Erkennung der Position einer Bauteilaufnahme oder zur Festlegung der Position der Bauteilaufnahme wird die Bauteilaufnahme mit einer Erkennungsspin versehen, der bei der Variante der Figuren 7 bis 12 als Zentrierplatte 117k ausgebildet ist. Eine beispielhafte Bauteilaufnahme 117 mit der Zentrierplatte 117k ist in Figur 9 dargestellt. Wie die Bauteilaufnahme der Figur 3 weist auch die Bauteilaufnahme 117 der Figur 9 einen Magnetfuß 117a auf, der eine teleskopartig ausfahrbare Hülsenanordnung 117b trägt. Die Hülsenanordnung 117b besteht aus einer Außenhülse 117c und einer Innenhülse 117d. In der in Figur 3 dargestellten Variante ist in die Innenhülse 117d die Erkennungsplatte 117k eingesetzt. Die Zentrierplatte 117k weist eine Öffnung 128 auf, deren Unterseite mit einem Boden 129 verschlossen ist. Der Innendurchmesser der Öffnung 128 ist etwas größer als der Außendurchmesser des Pins 127 des mechanischen Positionssensors 125, sodass der Pin 127 in die Öffnung 128 eingreifen kann, während andere Teile des Sensorkopfes 126 des mechanischen Positionssensors 125 nicht in die Öffnung 128 eingreifen können. Die Tiefe der Öffnung 128, also der Abstand der Oberseite der Bodenplatte 129 von der Oberseite der Zentrierplatte 117k, ist kleiner als die maximale Ausfahrstrecke des Pins 127 aus dem Sensorkopf 126. Somit kann unterschieden werden, ob sich der Sensorkopf 126 auf einem Außenbereich der Oberfläche 130 der Zentrierplatte 117k befindet, weil in diesem Bereich der Pin 127 vollständig in den Sensorkopf 126 hineingedrückt ist, oder ob sich der Sensorkopf 126 im Zentrum der Zentrierplatte 117k befindet, weil in diesem Fall der Pin 127 teilweise ausgefahren in die Öffnung 128 der Zentrierplatte 117k eingreift. Dieser Zustand kann auch von einem Zustand unterschieden werden, bei welchem sich der Sensorkopf 126 vollständig außerhalb der Zentrierplatte 117k befindet, weil in diesem Zustand der Erkennungspin 127 maximal weit ausgefahren ist. Bei der in Figur 9 dargestellten Variante der Bauteilaufnahme 117 ist anstelle einer Rändelschraube ein Kipphebel 117I zur Höhenfixierung der teleskopartig ausfahrbaren Hülsenanordnung 117b vorgesehen, welcher die Innenhülse 117d in der gewünschten Position bezüglich der Außenhülse 117c festlegt.

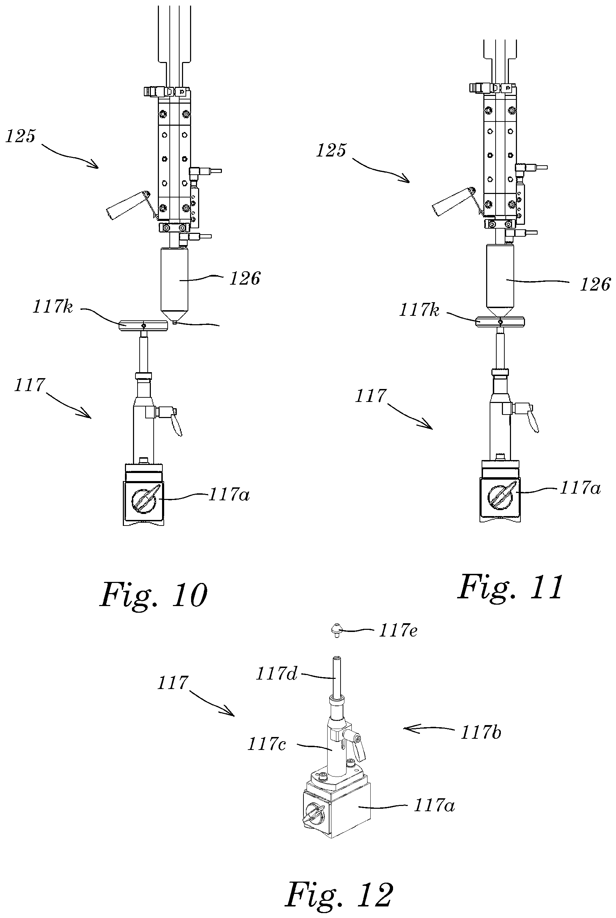

In den Figuren 10 und 11 ist dargestellt, wie der mechanische Positionssensor 125 mit der in einer Bauteilaufnahme 117 befestigten Zentrierplatte 117k zusammenwirkt. Im dargestellten Beispiel wurde der mechanische Positionssensor 125 computergesteuert an eine vorgegebene Stelle platziert, an der die Bauteilaufnahme 117 positioniert werden soll. Das Bedienpersonal nimmt eine mit einer Zentrierplatte 117k versehene Bauteilaufnahme und positioniert sie mit ausgeschaltetem Magnetfuß 117a unter dem mechanischen Positionssensor 125. In der in Figur 10 dargestellten Position befindet sich die Bauteilaufnahme noch neben der vorgegebenen Sollposition. Der Pin 127 ragt maximal aus dem Sensorkopf 126 heraus, sodass dem Bedienpersonal signalisiert wird, dass sich die Bauteilaufnahme noch nicht an ihrer vorgesehenen Position befindet. Bewegt das Bedienpersonal die Bauteilaufnahme 117 ausgehend von der in Figur 10 dargestellten Position geringfügig nach rechts, so kommt der Pin 127 gegen die Oberfläche 130 der Zentrierplatte 117k in Anlage und wird durch die Platte 117k vollständig in den Sensorkopf 126 hineingedrückt. Auch in dieser Position wird dem Bedienpersonal signalisiert, dass sich die Bauteilaufnahme 117 noch nicht an ihrer vorgesehenen Stelle befindet. Erst wenn sich die Bauteilaufnahme 117, wie in Figur 11 dargestellt, zentral unterhalb des Erkennungspins 127 befindet, kann der Erkennungspin in die Öffnung 128 der Zentrierplatte 117k eingreifen und nimmt eine teilweise ausgefahrene Position ein. In dieser Stellung wird dem Bedienpersonal beispielsweise optisch und/oder akustisch signalisiert, dass sich die Bauteilaufnahme 117 an ihrer vorgesehenen Position befindet. Durch Einschalten des Magnetfußes 117a kann das Bedienpersonal die Bauteilaufnahme dann an der vorgesehenen Stelle arretieren.

In Figur 12 ist schließlich angedeutet, wie die Bauteilaufnahme 117 umgerüstet wird, damit das zu beschichtende Bauteil 113 auf der Bauteilaufnahme angeordnet werden kann. Dazu wird die in Figur 12 schon nicht mehr dargestellte Zentrierplatte 117k entfernt und durch einen Indexstift 117e ersetzt. Dazu wird der Indexstift 117e in die Innenhülse 117d der teleskopartig ausfahrbaren Hülsenanordnung 117b eingesetzt.

## Patentansprüche

1. Verfahren zum Auftragen eines Fluids auf eine Oberfläche (12,112) eines Bauteils (13), wobei man das Bauteil (13,113) auf mehreren Bauteilaufnahmen (17,18,19,20,117,118) in einer computergesteuerten Beschichtungsanlage (10) anordnet, die Position des Bauteils (13,113) erfasst und das Fluid gemäß einem vorprogrammierten Beschichtungsverlauf auf die Oberfläche (12,112) des Bauteils (13,113) aufträgt, wobei wenigstens eine der Bauteilaufnahme (17,18,19,20,117,118) auf einer Grundplatte (16,116) frei positionierbar montiert ist
**dadurch gekennzeichnet,**
**dass** die Anordnung und Positionserfassung des Bauteils (13,113) in der Beschichtungsanlage (10) erfolgt, indem man die Bauteilaufnahmen (17,18,19,20,117,118) an vorgegeben Stellen auf der Grundplatte (16,116) anordnet.

2. Verfahren gemäß Anspruch 1, **dadurch gekennzeichnet, dass** man das Bauteil (13,113) mittels drei bis fünf frei positionierbarer Bauteilaufnahmen (17,18,19,20,117,118) in der Beschichtungsanlage anordnet.

3. Verfahren gemäß einem der Ansprüche 1 oder 2, **dadurch gekennzeichnet, dass** wenigstens eine der Bauteilaufnahmen (17,18,19,20,117,118) höhenverstellbar ist.

4. Verfahren gemäß einem der Ansprüche 1 bis 3, **dadurch gekennzeichnet, dass** die frei positionierbaren Bauteilaufnahmen (17,18,19,20,117,118) mittels Magnetfüßen (17a,18a,19a,20a,117a,118a) auf der Grundplatte (16,116) arretierbar sind.

5. Verfahren gemäß einem der Ansprüche 1 bis 4, **dadurch gekennzeichnet, dass** die Bauteilaufnahmen (17,18,19,20,117,118) austauschbare Kopfteile (17e,17f,117e,117k) aufweisen.

6. Verfahren gemäß einem der Ansprüche 1 bis 5, **dadurch gekennzeichnet, dass** die vorgegeben Stellen für die Bauteilaufnahmen (17,18,19,20) mittels Laserstrahl (24) angezeigt werden.

7. Verfahren gemäß einem der Ansprüche 1 bis 5, **dadurch gekennzeichnet, dass** die vorgegeben Stellen für die Bauteilaufnahmen (117,118) mittels eines mechanischen Positionssensors (125) angezeigt werden.

8. Verfahren gemäß einem der Ansprüche 1 bis 7, **dadurch gekennzeichnet, dass** man die vorgegebenen Stellen für die Bauteilaufnahmen (17,18,19,20,117,118) bei der Ersteinrichtung der Beschichtungsanlage für ein neues Bauteil (13,113) festlegt und in der Beschichtungsanlage (10,110) speichert.

9. Verfahren gemäß Anspruch 8, **dadurch gekennzeichnet, dass** man bei der Ersteinrichtung der Beschichtungsanlage für ein neues Bauteil (13,113) das Bauteil frei in der Beschichtungsanlage (10,110) anordnet und ausrichtet, und die Positionen der Bauteilaufnahmen (17,18,19,20,117,118) erfasst und speichert.

10. Computergesteuerte Beschichtungsanlage (10,110) zum Auftragen eines Fluids auf eine Oberfläche (12,112) eines Bauteils (13,113) mit:
wenigstens einer Grundplatte (16,116), auf der mehrere Bauteilaufnahmen (17,18,19,20,117,118) frei positionierbar sind;
wenigstens einer beweglichen Dosierspitze (11,111) zum Auftragen des Fluids auf die Oberfläche (12,112) des Bauteils (13,113); **dadurch gekennzeichnet, dass** die Beschichtungsanlage (10, 110) wenigstens eine Einrichtung zu Erfassung der Soll-Positionen der Bauteilaufnahmen (17,18,19,20,117,118) und/oder zur Anzeige der Soll-Positionen der Bauteilaufnahmen (17, 18, 19, 20, 117, 118) aufweist.

11. Beschichtungsanlage gemäß Anspruch 10, **dadurch gekennzeichnet, dass** die Einrichtung zu Erfassung der Soll-Positionen der Bauteilaufnahmen (17,18,19,20) und/oder zur Anzeige der Soll-Positionen der Bauteilaufnahmen (17,18,19,20) einen Laser (24) umfasst.

12. Beschichtungsanlage gemäß Anspruch 10, **dadurch gekennzeichnet, dass** die Einrichtung zu Erfassung der Soll-Positionen der Bauteilaufnahmen (117,118) und/oder zur Anzeige der Soll-Positionen der Bauteilaufnahmen (117,118) einen mechanischen Positionssensor (125) umfasst.

## Claims

1. Method for applying a fluid onto a surface (12, 112) of a component (13), wherein the component (13, 113) is arranged on a plurality of component mounts (17, 18, 19, 20, 117, 118) in a computer-controlled coating system (10), the position of the component (13, 113) is detected and the fluid is applied according to a preprogrammed coating process onto the surface (12, 112) of the component (13, 113), wherein at least one of the component mount (17, 18, 19, 20, 117, 118) is mounted in a freely positionable manner on a base plate (16, 116),
**characterised in that**
the arrangement and detection of position of the component (13, 113) in the coating system (10) is performed **in that** the component mounts (17, 18, 19, 20, 117, 118) are arranged in predefined places on the base plate (16, 116).

2. Method according to claim 1, **characterised in that** the component (13, 113) is arranged in the coating system by means of three to five freely positionable component mounts (17, 18, 19, 20, 117, 118).

3. Method according to any of claims 1 or 2, **characterised in that** at least one of the component mounts (17, 18, 19, 20, 117, 118) is height-adjustable.

4. Method according to any of claims 1 to 3, **characterised in that** the freely positionable component mounts (17, 18, 19, 20, 117, 118) can be locked on the base plate (16, 116) by means of magnetic feet (17a, 18a, 19a, 20a, 117a, 118a).

5. Method according to any of claims 1 to 4, **characterised in that** the component mounts (17, 18, 19, 20, 117, 118) have exchangeable head parts (17e, 17f, 117e, 117k).

6. Method according to any of claims 1 to 5, **characterised in that** the predefined places for the component mounts (17, 18, 19, 20) are displayed by means of laser beam (24).

7. Method according to any of claims 1 to 5, **characterised in that** the predefined places for the component mounts (117, 118) are displayed by means of a mechanical position sensor (125).

8. Method according to any of claims 1 to 7, **characterised in that** the predefined places for the component mounts (17, 18, 19, 20, 117, 118) are set during the initial setup of the coating system for a new component (13, 113) and saved in the coating system (10, 110).

9. Method according to claim 8, **characterised in that** during the initial setup of the coating system for a new component (13, 113) the component is arranged and aligned freely in the coating system (10, 110), and the positions of the component mounts (17, 18, 19, 20, 117, 118) are detected and saved.

10. Computer-controlled coating system (10, 110) for applying a fluid onto a surface (12, 112) of a component (13, 113) with:
at least one base plate (16, 116), on which a plurality of component mounts (17, 18, 19, 20, 117, 118) can be freely positioned;
at least one movable dispensing tip (11, 111) for applying the fluid onto the surface (12, 112) of the component (13, 113);
**characterised in that** the coating system (10, 110) has at least one device for detecting the target positions of the component mounts (17, 18, 19, 20, 117, 118) and/or for displaying the target positions of the component mounts (17, 18, 19, 20, 117, 118).

11. Coating system according to claim 10, **characterised in that** the device for detecting the target positions of the component mounts (17, 18, 19, 20) and/or for displaying the target positions of the component mounts (17, 18, 19, 20) comprises a laser (24).

12. Coating system according to claim 10, **characterised in that** the device for detecting the target positions of the component mounts (117, 118) and/or for displaying the target positions of the component mounts (117, 118) comprises a mechanical position sensor (125).

## Revendications

1. Procédé d'application d'un fluide à la surface (12, 112) d'un composant (13), le composant (13, 113) étant disposé sur plusieurs organes de réception de composant (17, 18, 19, 20, 117, 118) dans une installation de revêtement (10) commandée par ordinateur, la position du composant (13, 113) étant saisie et le fluide étant appliqué sur la surface (12, 112) du composant (13, 113) selon un déroulement préprogrammé de l'application du revêtement, au moins un des organes de réception de composant (17, 18, 19, 20, 117, 118) étant monté sur une plaque de base (16, 116) de manière à pouvoir être positionné librement,
**caractérisé en ce que** la disposition et la saisie de la position du composant (13, 113) sont effectuées dans l'installation de revêtement (10) en disposant les organes de réception de composant (17, 18, 19, 20, 117, 118) à des endroits prédéterminés sur la plaque de base (16, 116).

2. Procédé selon la revendication 1, **caractérisé en ce que** l'on dispose le composant (13, 13) dans l'installation de revêtement à l'aide de trois à cinq organes de réception de composant (17, 18, 19, 20, 117, 118).

3. Procédé selon l'une des revendications 1 ou 2, **caractérisé en ce qu'**au moins un des organes de réception de composant (17, 18, 19, 20, 117, 118) est réglable en hauteur.

4. Procédé selon l'une des revendications 1 à 3, **caractérisé en ce que** les organes de réception de composant (17, 18, 19, 20, 117, 118) adaptés pour pouvoir être disposés librement, sont configurés pour pouvoir être fixés sur la p laque de base (16, 116) à l'aide de pieds magnétiques (17a, 18a, 19a, 20a, 117a, 118a).

5. Procédé selon l'une des revendications 1 à 4, **caractérisé en ce que** les organes de réception de composant (17, 18, 19, 20, 117, 118) comprennent des parties de tête (17e, 17f, 117^{e}, 117k) remplaçables.

6. Procédé selon l'une des revendications 1 à 5, **caractérisé en ce que** les endroits prédéterminés pour les organes de réception de composant (17, 18, 19, 20) sont indiqués par un faisceau laser (24).

7. Procédé selon l'une des revendications 1 à 5, **caractérisé en ce que** les endroits prédéterminés pour les organes de réception de composant (117, 118) sont indiqués par un capteur de position (125) mécanique.

8. Procédé selon l'une des revendications 1 à 7, **caractérisé en ce que** l'on détermine les endroits prédéterminés pour les organes de réception de composant (17, 18, 19, 20, 117, 118) lors de la première préparation au fonctionnement de l'installation de revêtement pour un nouveau composant (13, 113) et l'on les met en mémoire dans l'installation de revêtement (10, 110).

9. Procédé selon la revendication 8, **caractérisé en ce que**, lors de la première préparation au fonctionnement de l'installation de revêtement pour un nouveau composant (13, 113), l'on dispose et oriente le composant librement dans l'installation de revêtement (10, 110) et l'on saisit et met en mémoire les positions des organes de réception de composant (17, 18, 19, 20, 117, 118).

10. Installation de revêtement (10, 110) commandée par ordinateur pour l'application d'un fluide sur une surface (12, 112) d'un composant (13, 113), avec
au moins une plaque de base (16, 116) sur laquelle plusieurs organes de réception de composant (17, 18, 19, 20, 117, 118) peuvent être positionnés librement,
au moins une pointe de dosage mobile (11, 111) pour l'application du fluide sur la surface (12, 112) du composant (13, 113),
**caractérisée en ce que** l'installation de revêtement (10, 110) comprend au moins un dispositif pour saisir les positions de consigne des organes de réception de composant (17, 18, 19, 20, 117, 118) et/ou pour l'affichage des positions de consigne des organes de réception de composant (17, 18, 19, 20, 117, 118).

11. Installation de revêtement selon la revendication 10, **caractérisé en ce que** le dispositif pour saisir les positions de consigne des organes de réception de composant (17, 18, 19, 20) et/ou pour l'affichage des positions de consigne des organes de réception de composant (17, 18, 19, 20) comprend un laser (24).

12. Installation de revêtement selon la revendication 10, **caractérisé en ce que** le dispositif pour saisir les positions de consigne des organes de réception de composant (117, 118) et/ou pour l'affichage des positions de consigne des organes de réception de composant (117, 118) comprend un capteur de position (125) mécanique.
